**Europäisches Patentamt**

**European Patent Office**

**Office européen des brevets**

(19)

(11) Publication number: **0 151 990**
**B1**

(12) # EUROPEAN PATENT SPECIFICATION

(45) Date of publication of patent specification: **07.02.90**

(51) Int. Cl.$^5$: **C 08 F 299/06, C 08 F 220/36**

(21) Application number: **85100753.4**

(22) Date of filing: **31.03.82**

(60) Publication number of the earlier application in accordance with Art. 76 EPC: **0 064 809**

(54) Copolymerisation of unsaturated urethane monomers.

(30) Priority: **28.04.81 GB 8113121**
**10.07.81 GB 8121379**

(43) Date of publication of application:
**21.08.85 Bulletin 85/34**

(45) Publication of the grant of the patent:
**07.02.90 Bulletin 90/06**

(84) Designated Contracting States:
**AT BE CH DE FR GB IT LI LU NL SE**

(56) References cited:
**DE-A-2 209 149**
**FR-A-2 170 463**
**FR-A-2 197 932**
**US-A-3 425 988**
**US-A-3 954 714**

(73) Proprietor: **IMPERIAL CHEMICAL INDUSTRIES PLC**
**Imperial Chemical House Millbank**
**London SW1P 3JF (GB)**

(72) Inventor: **Orton, Michael Leslie**
**24 School lane**
**Hartford Northwich Cheshire CW8 (GB)**
Inventor: **Spurr, William Ian**
**10 Alamein Crescent**
**Warrington Cheshire (GB)**

(74) Representative: **Thomas, Ieuan et al**
**Imperial Chemical Industries PLC Legal Department: Patents PO Box 6 Bessemer Road Welwyn Garden City Herts, AL7 1HD (GB)**

Courier Press, Leamington Spa, England.

## Description

This invention relates to the copolymerisation of unsaturated urethane monomers and more particularly to the 'in mould' copolymerisation of certain polyurethane polyacrylates and polymethacrylates, and compositions for use therein.

A potentially attractive and economical method of manufacturing moulded plastics articles and components is to introduce a polymerisable liquid composition into a mould and to effect rapid "in mould" polymerisation. In such a moulding process it is desirable that the time required for polymerisation is less than 10 minutes, preferably 5 minutes or less (if possible less than 2 minutes). It is also desirable that such rapid polymerisation may be achieved at ambient temperatures or at temperatures not greatly elevated above ambient, for example at initial mould temperatures of 60°C or below.

The properties required in a polymerisable composition for use in such a moulding process are thus distinct from those required in other compositions, for example compositions intended to be used in the protective coating of substrates. The applicability of such moulding processes to the polymerisation or copolymerisation of vinylic monomers has hitherto been greatly restricted by the lack of polymerisable compositions capable of being polymerised at the required rate at an appropriate temperature to yield a polymerised product sufficiently rigid to be removed from the mould.

In United States Patent 3, 856,830 and its divisional 3,954,714 there are described certain ethylenically-unsaturated urethane monomers comprising the reaction product of (a) an organic polyisocyanate having at least 3 isocyanate groups and (b) a stoichiometric quantity of a hydroxyl-terminated ethylenically-unsaturated ester for reacting with each of said isocyanate groups. The urethane monomers described may be derived from a variety of hydroxyl-terminated esters, and the said monomers may be used in the preparation of a variety of homopolymers and copolymers, as well as mixed resins. Examples are given of the preparation of copolymers with styrene, styrene/butyl methacrylate and styrene/divinyl benzene. It is taught therein that in most instances it has been found desirable to first react the subject reactants at room temperature for about 16 to 24 hours, and then post cure the resulting product at temperatures within the range of 80°C to 175°C for 1 to 6 hours.

DE—A—2209149 describes polymerisable compositions contain an adduct of a polyisocyanate, a polyol and a hydroxy-ester of (meth)acrylic acid. Suitable polyols are discussed on page 4 of the specification. They are simple low molecular weight aliphatic polyols and polyester- and polyether-alcohols.

FR—A—2197932 also describes polyurethane poly(meth)acrylates derived from polyisocyanates, polyfunctional compounds containing at least two isocyanate-reactive groups and hydroxyalkyl (meth)acrylates. The polyfunctional isocyanate-reactive compounds are discussed in the specification and include simple glycols, higher functionality polyols, polyether polyols, polyester polyols and alkylene diamines.

US 3425988 mentions bisphenol A for use in the preparation of urethane polyisocyanates in conjunction with "any of the above-described isocyanates" (column 3, lines 22—43). The described isocyanates do not include polymethylene polyphenyl polyisocyanates. Furthermore, the optional diluents mentioned in the US—A—3425988 (column 3, line 70—column 4, line 4) do not include methyl methacrylate, an essential component of the presently claimed compositions.

We have now found that rapid in-mould polymerisation may advantageously be achieved by the use of certain polyurethane polyacrylates or polymethacrylates in combination with methyl methacrylate as comonomer.

According to the present invention there is provided a method of producing a moulded plastics product by in-mould copolymerisation of an unsaturated urethane compound and a vinyl monomer copolymerisable therewith, characterised in that

(a) the unsaturated urethane compound is a polyurethane polyacrylate or polymethacrylate resin derived from a hydroxyalkyl acrylate or methacrylate by reaction of hydroxy groups thereof with the isocyanate groups of a urethane polyisocyanate derived from a polymethylene polyphenyl polyisocyanate by reaction thereof with the hydroxyl groups of a dihydric phenol or bis-phenol, the said urethane polyisocyanate having an isocyanate functionality greater than 2.0 and

(b) the vinyl monomer is methyl methacrylate.

The hydroxyalkyl acrylate or methacrylate preferably contains from 2 to 4 carbon atoms in the hydroxyalkyl group; 2-hydroxyethyl and 2-hydroxypropyl acrylates and methacrylates are especially preferred.

The polyurethane polyacrylate or polymethacrylate is derived from a urethane polyisocyanate which is preferably a polyurethane polyisocyanate.

Suitable dihydric phenols and bis-phenols include, for example, 2,2-bis(4-hydroxyphenyl) propane (Bisphenol A) and bis(4-hydroxyphenyl) sulphone (Bisphenol S).

The reaction product may also contain a proportion of one or more polyurethanes of higher molecular weight derived by reaction of the above product with further molecules of polyol and polyisocyanate.

The isocyanate functionality (i.e. average number of isocyanate groups per molecule) of the polyurethane polyisocyanate employed is preferably at least 2.2, for example in the range from 2.5 to 3.0.

In the preparation of a polyurethane polyisocyanate, the proportions of polyisocyanate and phenol are chosen so that all the hydroxyl groups of the phenol are converted into urethane groups. Consequently, the isocyanate functionality of the polyurethane polyisocyanate will be greater than the isocyanate functionality of the polyisocyanate used as starting material. Thus for example, if the polyisocyanate starting material has a functionality (n) of 2.5 the isocyanate functionality of the polyurethane polyisocyanate derived from a dihydric phenol or bisphenol will be 2n−2=3.0.

Whichever particular phenol is used, the relative proportions of phenol and polyisocyanate and/or the isocyanate functionality of the polyisocyanate is chosen so as to yield the required isocyanate functionality in the polyurethane polyisocyanate.

The polyurethane polyacrylates or polymethacrylates of the present invention may be prepared by reaction of the hydroxyalkyl acrylate or methacrylate with a urethane polyisocyanate of functionality greater than 2.0 using methods conventional in the art for the preparation of polyurethanes.

Mixtures of two or more hydroxyalkyl acrylates and/or methacrylates may be used if desired.

The relative proportions of the reactants employed are preferably such as to provide at least 1 mole of the hydroxyalkyl acrylate or methacrylate per isocyanate group. Excess (unreacted) hydroxyalkyl acrylate or methacrylate is in general not objectionable in the reaction product since any such excess monomer may in many cases simply be incorporated in the copolymer produced in the subsequent copolymerisation process. The extent of any excess of hydroxyalkyl acrylate or methacrylate will therefore be determined in practice by economic considerations and the desirability or otherwise of incorporating the particular hydroxyalkyl acrylate or methacrylate in the final copolymer.

Catalysts used in the reaction between the hydroxyalkyl acrylate or methacrylate and the urethane polyisocyanate may be those known in the art of polyurethane production, for example tertiary amines and metal salts, especially di-n-butyltin dilaurate.

The reaction between the hydroxyalkyl acrylate or methacrylate and the urethane polyisocyanate is preferably carried out in the presence of an inert liquid diluent. A wide range of diluents may be used but most conveniently, in order to avoid the need for separation of the polyurethane polyacrylate or polymethacrylate, the reaction is carried out in the presence of methyl methacrylate as diluent.

Similarly, the copolymerisation of the polyurethane polyacrylate or polymethacrylate with methyl methacrylate may be carried out using techniques well known in the art of bulk polymerisation. A wide range of polymerisation initiators and concentrations thereof may be used, depending upon the desired temperature and rate of polymerisation. The catalyst may be, for example, a peroxide catalyst and this may be used in conjunction with a tertiary amine promoter. A suitable combination in many cases is, for example, dibenzoyl peroxide in conjunction with N,N-diethylaniline or N,N-dimethyl-para-toluidine.

The relative proportions of the polyurethane polyacrylate or polymethacrylate and the methyl methacrylate monomer to be copolymerised therewith will depend upon the required properties of the copolymer product and upon the copolymerisation conditions to be employed. In general the proportion of the polyurethane polyacrylate and/or polymethacrylate is preferably in the range from 10 to 90 (for example from 25 to 75, especially from 25 to 50) parts by weight per hundred total parts of polyurethane polyacrylate and/or polymethacrylate plus methyl methacrylate.

The mechanical properties (for example flexural strength and flexural modulus) of the products of the said copolymerisation may be acceptable for some intended uses without the need to introduce additional components. In some cases, however, it may be desirable to enhance the mechanical properties by the incorporation of fillers into the reaction mixture prior to copolymerisation. Thus, for example, inorganic fillers may be incorporated in particulate, plate-like or fibrillar form. Suitable fillers include silica, calcium carbonate, talc, alumina trihydrate, mica, various clays and vermiculite. Glass fibre, either in continuous form or, for example, of aspect ratio from 10/1 to 500/1 (especially from 20/1 to 300/1) may be used as filler.

When an inorganic filler is used a suitable "coupling agent" may in some cases advantageously be incorporated to link the filler to the polymer matrix. Thus, for example, when the filler is silica a suitable silane coupling agent may be incorporated, for example γ-methacryloxypropyltrimethoxysilane.

Organic polymers, especially thermoplastic polymers, may also be incorporated in the reaction mixture prior to copolymerisation. One or more organic polymers may either be dissolved in the reaction mixture or added in particulate form, with or without the incorporation of inorganic fillers as already described. Polymers which may be incorporated include polymers and copolymers of alkyl acrylates and/or methacrylates (especially of acrylates and/or methacrylates containing from 1 to 8 carbon atoms in the alkyl group, for example methyl methacrylate); polymers and copolymers of styrene and α-methylstyrene (for example copolymers of styrene with butadiene); polymers and copolymers of acrylonitrile (for example copolymers of vinyl chloride with vinyl acetate) and polymers and copolymers of vinyl acetate. Incorporation of such polymers is often useful in reducing in-mould shrinkage.

In general, the proportion of organic polymer incorporated may be, for example, from 1 to 25 parts by weight (especially from 3 to 10 parts) per 100 parts of methyl methacrylate and polyurethane acrylate or methacrylate, the upper limit depending upon the desired viscosity of the mixture and the desired mechanical properties of the final product.

Other additives such as plasticisers and colourants may also be incorporated as is known in the art.

A particularly desirable use for the polyurethane polymethacrylate resins solutions in methyl methacrylate described herein is for the production of fibre-reinforced composites, especially glass-fibre-reinforced composites, by automated processes.

In such processes, for example closed mould processes using matched male and female moulds, glass fibre reinforcement (which may be chopped strand mat, continuous filament mat, woven continuous filament mat or any other variation of mat) is placed in one half of the mould, the mould is closed and resin is caused to flow through and wet-out the glass-fibre reinforcement either by sucking resin through by applying a vacuum to the closed mould cavity, or by pumping the resin through, or by a combination of vacuum-assisted pumping. Alternatively, liquid resin may be placed in the female half of the mould and the act of mould closure itself causes the resin to flow through the glass fibre.

For improved efficiency and speed in such processes it is advantageous that the resin shall flood and wet-out the fibrous reinforcement rapidly, shall minimise the inclusion of air bubbles or voids, shall minimise "washing" of glass fibre (a term used in the industry to describe movement of glass-fibre caused by the flow of resin), and shall flow through the fibrous reinforcement under the minimum of pressure. These advantages are more readily obtained when the resin has low viscosity. Furthermore, it is desirable that, once the mould cavity is filled with resin, the resin shall polymerise rapidly to a product stiff enough and strong enough to be demoulded. It is an advantage of the polyurethane polyacrylates and polymethacrylates described herein that solutions in methyl methacrylate having very low viscosities may be used without compromising the rapid polymerisation characteristics.

In general, it is preferred that the viscosity of the mixture of polyurethane polyacrylate or polymethacrylate and methyl methacrylate is not above 200 centipoise; a viscosity not above 100 centipoise is especially preferred, for example from 5 to 50 centipoise. (Viscosities throughout this specification are as measured at 20°C with a Brookfield viscometer at 60 rpm; 1 centipoise=1 mPa.s).

The relatively low solution viscosities which can be achieved with polyurethane polymethacrylate resins confer an additional advantage in that relatively high loadings of inorganic fillers can be included whilst maintaining the advantageous processing features described before which result from a low viscosity resin.

The polyurethane polymethacrylate resin solutions in methyl methacrylate can also be used in pultrusion processes.

The invention is illustrated by the following Example. Unless otherwise stated all parts and percentages are by weight.

Example

(a) The polyisocyanate used in this Example was 'Suprasec' DND, a mixture of 4,4'-diisocyanatodiphenylmethane and related polymethylene polyphenyl polyisocyanates and having an average isocyanate functionality of 2.6 ('Suprasec' is a trade mark).

'Suprasec' DND (118.7 g) was reacted with 38 g of Bisphenol A in 230 g of methyl methacrylate as solvent, using di-n-butylin dilaurate (1 g) as catalyst. During addition of the "Suprasec' DND, the temperature of the reaction mixture rose from ambient to 45—50°C. After the addition had been completed, the mixture was stored for a further 60 min, at the end of which period, the temperature had fallen to 20—25°C.

(b) The polyurethane polymethacrylate was prepared by reaction of the Bisphenol A/polyisocyanate reaction product with 81.8 g of 2-hydroxyethyl methacrylate to give a solution containing 50% by weight of the polyurethane polymethacrylate.

(c) Methyl methacrylate was added to the solution to give a solution containing 25% by weight of the polyurethane polymethacrylate.

Copolymerisation was carried out by adding dibenzoyl peroxide (1.5%) as catalyst and N,N-dimethyl-p-toluidine (0.3%) as accelerator. The mixture was cast into a glass cell (3 mm thick) at an initial temperature of 26°C. The peak exotherm was reached in 6.75 minutes and the copolymer produced was again a rigid sheet readily removable from the cell shortly after the peak exotherm had been reached.

## Claims

1. A method of producing a moulded plastics product by in-mould copolymerisation of an unsaturated urethane compound and a vinyl monomer copolymerisable therewith, characterised in that

(a) the unsaturated urethane compound is a polyurethane polyacrylate or polymethacrylate resin derived from a hydroxyalkyl acrylate or methacrylate by reaction of hydroxyl groups thereof with the isocyanate groups of a urethane polyisocyanate derived from a polymethylene polyphenyl polyisocyanate by reaction thereof with the hydroxyl groups of a dihydric phenol or bis-phenol, the said urethane polyisocyanate having an isoyanate functionality greater than 2.0 and

(b) the vinyl monomer is methyl methacrylate.

2. A method according to Claim 1, characterised in that the hydroxyalkyl acrylate or methacrylate contains from 2 to 4 carbon atoms in the hydroxyalkyl group.

3. A method according to claim 1 or claim 2, characterised in that the proportion of the polyurethane polyacrylate and/or polymethacrylate resin is in the range from 10 to 90 parts by weight per 100 total parts of methyl methacrylate and the said resin.

4. A method according to any of the preceding claims, characterised in that the mixture to be polymerised contains an organic polymer.

5. A method according to Claim 4, characterised in that the organic polymer is poly(methyl methacrylate).

6. A method according to any of the preceding claims, characterised in that the mixture to be polymerised contains an inorganic filler.

7. A method according to Claim 6, characterised in that the filler comprises glass fibre.

8. A polymerisable composition comprising an unsaturated urethane compound and a vinyl monomer copolymerisable therewith, characterised in that

(a) the unsaturated urethane compound is a polyurethane polyacrylate or polymethacrylate resin derived from a hydroxyalkyl acrylate or methacrylate by reaction of hydroxyl groups thereof with the isocyanate groups of a urethane polyisocyanate derived from a polymethylene polyphenyl polyisocyanate by reaction thereof with the hydroxyl groups of a dihydric phenol or bisphenol, the said urethane polyisocyanate having an isocyanate functionality greater then 2.0 and

(b) the vinyl monomer is methyl methacrylate.

9. A composition according to Claim 8, characterised in that the polyurethane polyacrylate or polymethacrylate resin is derived from a hydroxyalkyl acrylate or methacrylate containing from 2 to 4 carbon atoms in the hydroxyalkyl group.

10. A composition according to Claim 8 or Claim 9 characterised in that the proportion of the polyurethane polyacrylate and/or polymethacrylate resin is from 10 to 90 parts by weight per 100 total parts of methyl methacrylate and the said resin.

11. A composition according to any of Claims 8 to 10, characterised in that the composition also comprises an organic polymer.

12. A composition according to Claim 11, characterised in that the organic polymer is poly(methyl methacrylate).

**Patentansprüche**

1. Verfahren zur Herstellung eines geformten Kunststoffproduktes durch Copolymerisation im Formwerkzeug einer ungesättigten Urethanverbindung und eines damit copolymerisierbaren Vinylmonomeren, dadurch gekennzeichnet, daß

(a) die ungesättigte Urethanverbindung ein Polyurethanpolyacrylatharz oder -polymethacrylatharz ist, das von einem Hydroxyalkylacrylat oder -methacrylat durch Reaktion seiner Hydroxylgruppen mit den Isocyanatgruppen eines Urethanpolyisocyanates abgeleitet ist, wobei das Urethanpolyisocyanat durch Reaktion eines Polymethylenpolyphenylpolyisocyanates mit den Hydroxylgruppen eines zweiwertigen Phenols oder Bisphenols erhalten wird und eine Isocyanat-Funktionalität von mehr als 2,0 hat und

(b) das Vinylmonomer ein Methylmethacrylat ist.

2. Verfahren nach Anspruch 1, dadurch gekennzeichnet, daß das Hydroxylalkylacrylat oder -methylacrylate 2 bis 4 Kohlenstoffatome in der Hydroxyalkylgruppe enthält.

3. Verfahren nach Anspruch 1 oder 2, dadurch gekennzeichnet, daß das Mengenverhältnis des Polyurethanpolyacrylatharzes und/oder -polymethacrylatharzes im Bereich von 10 bis 90 Masseteile je 100 Gesamtteile des Methylmethacrylates und des Harzes liegt.

4. Verfahren nach einem der vorhergehenden Ansprüche, dadurch gekennzeichnet, daß die Mischung, die polymerisiert werden soll, ein organisches Polymer enthält.

5. Verfahren nach Anspruch 4, dadurch gekennzeichnet, daß das organische Polymer ein Poly(methylmethacrylat) ist.

6. Verfahren nach einem der vorhergehenden Ansprüche, dadurch gekennzeichnet, daß die Mischung, die polymerisiert werden soll, einen anorganischen Füllstoff enthält.

7. Verfahren nach Anspruch 6, dadurch gekennzeichnet, daß das Füllstoff Glasfasern umfaßt.

8. Polymerisierbare Masse, die eine ungesättigte Urethanverbindung und ein damit copolymerisierbares Vinylmonomer dadurch gekennzeichnet, daß

(a) die ungesättigte Urethanverbindung ein Polyurethanpolyacrylatharz oder -polymethacrylatharz ist, das von einem Hydroxyalkylacrylat oder -methacrylat durch Reaktion seiner Hydroxylgruppen mit den Isocyanatgruppen eines Urethanpolyisocyanates abgeleitet ist, wobei das Urethanpolyisocyanat durch Reaktion eines Polymethylenpolyphenylpolyisocyanates durch Reaktion mit den Hydroxylgruppen eines zweiwertigen Phenols oder Bisphenols erhalten wird und eine Isocyanat-Funktionalität von mehr als 2,0 hat und

(b) das Vinylmonomer ein Methylmethacrylat ist.

9. Masse nach Anspruch 8, dadurch gekennzeichnet, daß das Polyurethanpolyacrylatharz oder -polymethacrylatharz aus einem Hydroxyalkylacrylate oder -methacrylat abgeleitet ist, das 2 bis 4 Kohlenstoffatome in der Hydroxyalkylgruppe enthält.

10. Masse nach Anspruch 8 oder 9, dadurch gekennzeichnet, daß das Mengenverhältnis des Polyurethanpolyacrylatharzes und/oder -polymethacrylatharzes 10 bis 90 Masseteile je 100 Gesamtteile des Methylmethacrylates und des Harzes beträgt.

11. Masse nach einem der Ansprüche 8 bis 10, dadurch gekennzeichnet, daß die Masse auch ein organisches Polymer enthält.

12. Masse nach Anspruch 11, dadurch gekennzeichnet, daß das organische Polymer ein Poly(methylmethacrylat) ist.

**Revendications**

1. Procédé pour fabriquer un produit manufacturé en matière plastique moulée par copolymérisation en moule d'un composé d'uréthanne insaturé et d'un monomère vinylique copolymérisable avec celui-ci, caractérisé en ce que

(a) le composé d'uréthanne insaturé est une résine de polyacrylate ou polyméthacrylate de polyuréthanne issue d'un acrylate ou méthacrylate d'hydroxyalcoyle par réaction des radicaux hydroxyle de celui-ci avec les radicaux isocyanate d'un polyisocyanate d'uréthanne issu d'un polyméthylène polyphényl polyisocyanate par réaction de ce dernier avec les radicaux hydroxyle d'un phénol dihydroxylé ou bis-phénol, le polyisocyanate d'uréthanne ayant une fonctionnnalité isocyanate supérieure à 2,0, et

(b) le monomère vinylique est le méthacrylate de méthyle.

2. Procédé suivant la revendication 1, caractérisé en ce que l'acrylate ou méthacrylate d'hydroxyalcoyle compte 2 à 4 atomes de carbone dans le radical hydroxyalcoyle.

3. Procédé suivant la revendication 1 ou 2, caractérisé en ce que la proportion de résine de polyacrylate et/ou polyméthacrylate de polyuréthanne se situe dans l'intervalle de 10 à 90 parties en poids pour 100 parties au total de méthacrylate de méthyle et de la résine.

4. Procédé suivant l'une quelconque des revendications précédentes, caractérisé en ce que le mélange à polymériser contient un polymère organique.

5. Procédé suivant la revendication 4, caractérisé en ce que le polymère organique est le poly(méthacrylate de méthyle).

6. Procédé suivant l'une quelconque des revendications précédentes, caractérisé en ce que le mélange à polymériser contient une charge inorganique.

7. Procédé suivant la revendication 6, caractérisé en ce que la charge comprend des fibres de verre.

8. Composition polymérisable comprenant un composé d'uréthanne insaturé et un monomère vinylique copolymérisable avec celui-ci, caractérisée en ce que

(a) le composé d'uréthanne insaturé est une résine de polyacrylate ou polyméthacrylate de polyuréthanne issue d'un acrylate ou méthacrylate d'hydroxyalcoyle par réaction des radicaux hydroxyle de celui-ci avec les radicaux isocyanate d'un polyisocyanate d'uréthanne issu d'un polyméthylène polyphényl polyisocyanate par réaction de ce dernier avec les radicaux hydroxyle d'un phénol dihydroxylé ou bis-phénol, le polyisocyanate d'uréthanne ayant une fonctionnalité isocyanate supérieur à 2,0, et

(b) le monomère vinylique est le méthacrylate de méthyle.

9. Composition suivant la revendication 8, caractérisée en ce que la résine de polyacrylate ou polyméthacrylate de polyuréthanne est issue d'un acrylate ou méthacrylate d'hydroxyalcoyle comptant 2 à 4 atomes de carbone dans le radical hydroxyalcoyle.

10. Composition suivant la revendication 8 ou 9, caractérisée en ce que la proportion de la résine de polyacrylate et/ou polyméthacrylate de polyuréthanne est de 10 à 90 parties en poids pour 100 parties au total de méthacrylate de méthyle et de la résine.

11. Composition suivant l'une quelconque des revendications 8 à 10, caractérisée en ce que la composition, comprend aussi un polymère organique.

12. Composition suivant la revendication 11, caractéirsée en ce que le polymère organique est le poly(méthacrylate de méthyle).